## Europäisches Patentamt

## European Patent Office

## Office européen des brevets

(19)

(11) Veröffentlichungsnummer: **0 144 614**
**B1**

(12) **EUROPÄISCHE PATENTSCHRIFT**

(45) Veröffentlichungstag der Patentschrift:
**31.05.89**

(51) Int. Cl.⁴: **C 08 F 14/06,** C 08 F 2/24,
C 08 J 9/06

(21) Anmeldenummer: **84112109.8**

(22) Anmeldetag: **10.10.84**

(54) **Verfahren zur Herstellung von verpastbaren Vinylchloridpolymerisaten.**

(30) Priorität: **03.12.83 DE 3343766**
**11.05.84 DE 3417434**

(43) Veröffentlichungstag der Anmeldung:
**19.06.85 Patentblatt 85/25**

(45) Bekanntmachung des Hinweises auf die Patenterteilung:
**31.05.89 Patentblatt 89/22**

(84) Benannte Vertragsstaaten:
**BE CH DE FR GB IT LI SE**

(56) Entgegenhaltungen:
**EP-A-0 090 142**
**EP-A-0 108 884**
**US-A-4 150 210**

(73) Patentinhaber: **HÜLS AKTIENGESELLSCHAFT,**
**Patentabteilung / PB 15 - Postfach 13 20, D-4370**
**Marl 1 (DE)**

(72) Erfinder: **Kruse, Wolfgang Andreas, Dr.,**
**Leverkusener Strasse 14, D-4370 Marl (DE)**
Erfinder: **Boeke, Burkhard, Dr., Im Hundel 34,**
**D-4358 Haltern 6 (DE)**

EP 0 144 614 B1

**Beschreibung**

Die nach dem erfindungsgemäßen Verfahren hergestellten Polymerisate sind zur Herstellung von Plastisolen sehr niedriger Viskosität sowohl bei niedrigen als auch hohen Schergefällen besonders geeignet. Dies erlaubt bei der Verarbeitung der Plastisole nach dem Streichverfahren hohe Verarbeitungsgeschwindigkeiten. Außerdem zeigen die Plastisole bei Verwendung der erfindungsgemäßen Vinylchloridpolymerisate sehr gute Lagerstabilität. Bei der Herstellung von Schaumstoffen aus entsprechenden Plastisolen und Verwendung von chemischen Treibmitteln erhält man bei Verwendung der erfindungsgemäßen Vinylchloridpolymerisate vorwiegend offenzellige Schäume mit guter Elastizität und gutem Rückstellvermögen.

Es sind sowohl kontinuierliche als auch diskontinuierliche Verfahren zur Herstellung von Pasten-Polyvinylchlorid bekannt. Das nach dem kontinuierlichen Verfahren hergestellte Vinylchloridpolymere ergibt in Plastisolen niedrige Viskositäten bei hohen Schergeschwindigkeiten. Man braucht zu dessen Herstellung jedoch höhere Emulgatormengen, was zu verringerter Transparenz und größerer Wasserempfindlichkeit führt. Die normalerweise unterhalb des Vinylchloridsättigungsdurckes kontinuierlich polymerisierten Vinylchloridpolymeren sind außerdem dem diskontinuierlich polymerisierten Polyvinylchlorid in der Thermostabilität unterlegen.

Die nach dem diskontinuierlichen Verfahren hergestellten Polyvinylchlorid-Typen können durch Emulsionspolymerisation mit deutlich geringeren Mengen an Emulgator polymerisiert werden, vor allem wenn der Emulgator nach dem Verfahren der DE-PS-1 964 029 oder gemäß den ausgelegten Unterlagen des belgischen Patentes 656 985 zugegeben wird. In allen Fällen entstehen jedoch Plastisole mit höheren Viskositäten als bei der kontinuierlichen Polymerisation.

Bekannt ist auch die Vinylchloridpolymerisation nach dem sogenannten Mikrosuspensionsverfahren Plastisole aus nach diesem Verfahren hergestellten Vinylchloridpolymeren zeigen ausgeprägt dilatantes Verhalten und sind daher zur Verarbeitung nach dem Streichverfahren weniger geeignet. Außerdem können stabile Latices nur bis zu einem Feststoffgehalt von ca. 40 Gewichtsprozent hergestellt werden, was die Sprühtrocknungskosten erhöht.

Es sind verschiedene diskontinuierliche Verfahren zur Vinylchloridpolymerisation unter Verwendung von Dispergierhilfen, meist Fettalkoholen, bekannt. Als Stand der Technik seien genannt:

1. DE-OS-2 850 105
2. DE-OS-2 742 178
3. EP-0 030 524
4. deutsche Anmeldung P-3 210 891.5
5. deutsche Anmeldung P-3 242 088.9

Die Polymerisation nach Verfahren 1 wird mittels öllöslicher Aktivatoren, teilweise unter Zusatz von reduzierenden Mitteln, durchgeführt. Dieses Verfahren führt zu Produkten, welche, zu Plastisolen verarbeitet, eine stark dilatante Fließcharakteristik aufweisen, wie es aus dem Vergleichsversuch A der deutschen Patentanmeldung P-3 210 891.5 hervorgeht.

Das in 2. beschriebene Verfahren verwendet zur Aktivierung anorganische Katalysatoren. Es wird demgemäß ein Gemisch, bestehend aus einem $C_{16}$-$C_{20}$-Alkylalkohol und einem Alkylsulfat ($C_{12}$-$C_{18}$), bei der Polymerisation eingesetzt. Wie die Vergleichsversuche B und C der deutschen Patentanmeldung P-3 210 891.5 zeigen, erhält man nach 2. entweder instabile oder feststoffarme Latices, die nach Sprühtrocknung ein Polyvinylchlorid liefern, das hochviskose Pasten mit einem ausgeprägten pseudoplastischen Fließvermögen ergibt.

Nach 3. wird eine wasserlösliche Substanz in Gegenwart von Wasser und Emulgator zunächst homogenisiert. Danach werden das Monomere und der Initiator zugegeben. Zur erfolgreichen Durchführung ist die Anwesenheit eines Saatlatex (Stabilisierungslatex) notwendig, und damit ist das Verfahren vergleichsweise aufwendig.

Nach 4. erhält man zwar niedrigviskose Pasten, es ist jedoch ein erhöhter technischer Aufwand erforderlich. Die während der Polymerisation zuzuführende Prädispersion muß nämlich in einem gesonderten beheizbaren Rührbehälter hergestellt und während des gesamten Polymerisationsvorganges bis über den Schmelzpunkt des eingesetzten Fettalkohols beheizt werden. Trotz Beheizung können sich die Prädispersionen während der Dosierzeit außerhalb des Kessels verändern, was zu schwankenden Produkteigenschaften führt. Hinzu kommt, daß man bei Verarbeitung der nach 4. hergestellten Produkte zu schäumbaren Plastisolen unter Verwendung von chemischen Treibmitteln, wie z. B. Azodicarbonamid, nach Gelierung Schaumstoffe mit vorwiegend geschlossenzelliger Schaumstruktur erhält. Dies ergibt bekanntlich Schäume mit mangelhaftem Rückstellvermögen.

Auch das in 5. angeführte Verfahren erfordert einen erhöhten technischen Aufwand, denn es wird ein Druckhomogenisator eingesetzt.

Diese Nachteile werden überwunden durch ein Verfahren zur Herstellung von verpastbaren Polymeren des Vinylchlorids oder Mischungen von Vinylchlorid mit bis zu 30 Gewichtsprozent copolymerisierbaren Monomeren durch diskontinuierliche Polymerisation in Gegenwart von wasserlöslichen oder monomerlöslichen Katalysatoren und einer Prädispersion aus

a) einem Alkalimetall- oder Ammoniumsalz einer 12 bis 18 C-Atome enthaltenden verzweigten oder unverzweigten Fettsäure, einer 10 bis 20 C-Atome enthaltenden verzweigten oder unverzweigten

2

Alkylsulfonsäure, einer 8 bis 18 C-Atome in der verzweigten oder unverzweigten Alkylkette enthaltenden Alkylarylsulfonsäure oder eines 6 bis 14 C-Atome im Alkoholteil enthaltenden Sulfobernsteinsäureesters in Mengen von 0,2 bis 3,0 Gewichtsprozent, bezogen auf Monomeres,

b) einem geradkettigen oder verzweigten $C_{12}$-$C_{20}$-Akanol in Mengen von 50 bis 200 Gewichtsprozent, bezogen auf das eingesetzt sid,

c) Wasser, sowie gegebenenfalls
d) einem monomerlöslichen Katalysator,

das dadurch gekennzeichnet ist, daß die Prädispersion nur mit 30 bis 80 Gewichtsprozent der insgesamt benötigten Emulgatormenge (Tensidmenge) hergestellt und dem Polymerisationsansatz zugefügt wird, während der Rest des Emulgators oder eines den Emulgator bildenden Bestandteils nach einem Umsatz von 10 bis 60 Gewichtsprozent dem Polymerisationsgemisch absatzweise oder kontinuierlich als wäßrige Lösung zudosiert wird. Vorzugsweise werden nur 40 bis 60 Gewichtsprozent der insgesamt benötigten Emulgatormenge zur Herstellung der Prädispersion eingesetzt. Insbesondere kann der Rest des Emulgators nach einem Umsatz von 20 bis 60 Gewichtsprozent zugegeben werden.

Die so erhaltenen Polymeren des Vinylchlorids lassen sich mit Vorteil zur Herstellung von Weichschaumstoffen unter Einsatz chemischer Treibmittel verwenden. Es entstehen nämlich Schaumstoffe mit überwiegend offenzelliger Struktur, welche bekanntlich ein gutes Rückstellvermögen zeigen.

Es ist überraschend, daß bei Verwendung einer Prädispersion mit deutlich reduzierter Emulgatormenge und der Zugabe einer wäßrigen Emulgatorlösung während der Polymerisation eine stabile Dispersion resultiert, die zu Produkten mit geringer Pastenviskosität führt. Überraschend wurde auch gefunden, daß aus daraus hergestellten chemisch verschäumbaren Pasten Schaumstoffe mit offenzelliger Schaumstruktur hervorgingen, welche bekanntlich ein sehr gutes Rückstellvermögen zeigen.

Es ist unerheblich, ob der Emulgator in der Emulgatorlösung als solcher zugegeben oder in situ freigesetzt wird. Werden nämlich fettsaure Salze als Emulgatoren zur Herstellung der Prädispersionen verwendet, so kann nach dem erfindungsgemäßen Verfahren die gesamte Fettsäure bei der Herstellung der Prädispersion vorgelegt, jedoch nur ein Teil der stöchiometrisch notwendigen Laugenmenge zur Bildung des Emulgators vorgelegt werden. Durch entsprechende Zugabe der wäßrigen Lösung einer Base, z. B. NaOH, KOH, Ammoniak usw., während der Polymerisation kann der Emulgator entsprechend einer Emulgatornachdosierung freigesetzt werden. Auf diese Weise kann auch die aufwendige Handhabung von Fettsäuresalzlösungen vermieden werden.

Die nach diesem erfindungsgemäßen Verfahren hergestellten Vinylchloridpolymerisate führen zu Pasten mit sehr niedriger Pastenviskosität.

Nach dem erfindungsgemäßen Verfahren kann die Prädispersion aus Wasser, Dispergierhilfsmittel und einer Teilmenge des Emulgators im Polymerisationskessel hergestellt werden. Zusätzliche aufheizbare Rührbehälter entfallen ebenso wie beheizbare Dosiergefäße und Dosierleitungen. Die Gefahr einer Veränderung der Prädispersion außerhalb des Polymerisationskessels besteht nicht, da lediglich das problemlos zu dosierende Tensid bzw. die Alkalilauge während der Polymerisation zugegeben werden.

Das verwendbare Emulgatorsystem besteht aus:

a) Alkalimetall- oder Ammoniumsalzen von Fettsäuren, von Alkylsulfonsäuren oder Alkylarylsulfonsäuren oder Sulfobernsteinsäureestern in Mengen von 0,2 bis 3 Gewichtsprozent, vorzugsweise 0,5 bis 1,5 Gewichtsprozent, bezogen auf das Monomere,

b) einem geradkettigen oder auch verzweigten $C_{12}$-$C_{20}$-Alkylalkohol oder einem Gemisch mehrerer solcher Alkohole in Mengen von 50 bis 200 Gewichtsprozent, vorzugsweise 70 bis 150 Gewichtsprozent, bezogen auf das eingesetzte Tensid.

Als Alkali - oder Ammoniumsalze von Fettsäuren, die als Emulgatorkomponente (Tensid) verwendet werden sollen, kommen solche in Betracht, deren Alkylkette 12 bis 18 Kohlenstoffatome enthalten und verzweigt oder unverzweigt sind. Es werden beispielsweise eingesetzt: Natrium-laurat, Natrium-myristat, Natrium-palmitat, Natrium-isopalmitat, Natrium-stearat. Auch die entsprechenden Kalium- und Ammoniumsalze sind geeignet.

Als Alkali- oder Ammoniumsalze von Alkylsulfonsäuren die als Emulgatorkomponente eingesetzt werden, kommen solche infrage, deren Alkylreste 10 bis 20 Kohlenstoffatome, vorzugsweise 14 bis 17 Kohlenstoffatome, enthalten und verzweigt oder unverzweigt sind. Es kommen beispielsweise zur Anwendung Natrium-decylsulfonat, Natrium-dodecylsulfonat, Natrium-palmityl-sulfonat, Natrium-stearylsulfonat, Natriumheptadecylsulfonat, Natrium-arachylsulfonat. Auch die Kalium- oder Ammoniumsalze sind mit analogem Erfolg einsetzbar. I. a. wird man Gemische der genannten Individuen bevorzugen, wie diese bei der Sulfonierung von technischen Alkangemischen anfallen.

Als Alkali- oder Ammoniumsalz von Alkylarylsulfonsäuren, die als Emulgatorkomponente verwendet werden sollen, lassen sich solche heranziehen, deren Alkylkette 8 bis 18 Kohlenstoffatome, vorzugsweise 10 bis 13 Kohlenstoffatome, enthält und verzweigt oder unverzweigt ist. Als Beispiele seien genannt: Natriumtetrapropylenbenzosulfonat, Natrium-p-m-dodecylbenzolsulfonat, Natrium-octadecylbenzolsulfonat, Natrium-octylbenzolsulfonat, Natrium-decylbenzolsulfonat, Natrium-tridecylbenzlsulfonat, Natrium-tetradecylbenzolsulfonat, Natrium-pentadecylbenzolsulfonat, Natrium-hexadecylbenzolsulfonat. Bevorzugt werden Gemische solcher Individuen eingesetzt. Es lassen sich gleichfalls auch die Kalium- oder Ammoniumsalze einsetzen.

Als Alkali- oder Ammoniumsalze von Sulfobernsteinsäureester, die als Emulgatorkomponente Verwendung finden sollten, lassen sich solche einsetzen, deren Alkoholteil 6 bis 14 Kohlenstoffatome, vorzugsweise 8 bis 10 Kohlenstoffatome, enthält und verzweigt oder unverzweigt ist. Es kommen beispielsweise infrage: Natriumdihexylsulfosuccinat, Natrium-dioctylsulfosuccinat, Natrium-di-2-ethylhexylsulfosuccinat, Natriumdidecylsulfosuccinat, Natrium-didodecylsulfosuccinat, Natrium-diisodecylsulfosuccinat, Natriumdiisododecylsulfosuccinat, Natrium-tridecylsulfosuccinat, Natrium-di-tetradecylsulfosuccinat und die entsprechenden Kalium- und Ammoniumsalze. Es lassen sich auch Gemishe der genannten Emulgatoren verwenden.

Als Dispergierhilfen können geradkettige oder verzweigte $C_{12}$-$C_{20}$-Alkohole eingesetzt werden, wie beispielsweise Laurylalkohol, Myristylalkohol, Palmitylalkohol, Stearylalkohol, Arachylalkohol, 2-Hexyldecanol, 2-Octyldodecanol. Es lassen sich auch Gemische der genannten Alkohole verwenden.

Die Komponenten a) und b) des Emulgatorsystems sollten in Wasser gelöst bzw. dispergiert werden. In dem Fall, daß für die Polymerisation ein monomerlöslicher Initiator gewählt wird, wird dieser ebenfalls der Mischung zugegeben. Falls die Schmelzpunkte der Fettalkohole oberhalb der Raumtemperatur liegen, wird der Dispergiervorgang vorteilhaft bei Temperaturen von 30 bis 70°C, d. h. oberhalb der Schmelztemperatur der Fettalkohole, durchgeführt.

Bei der Wahl eines geeigneten monomerlöslichen Initiators ist darauf zu achten, daß dieser während des Dispergiervorgangs noch keinen merklichen Zerfall erleidet. Es werden bevorzugt die Initiatoren eingesetzt, die bei der benötigten Dispergiertemperatur Halbwertezeiten von größer 10 Stunden, bevorzugt größer 20 Stunden, aufweisen. Wird aufgrund des hohen Schmelzpunktes eines eingesetzten Fettalkohols ein Initiator mit einer großen Halbwertzeit gewählt, so sollte die spätere Polymerisationsreaktion mittels geeigneter Reduktionsmittel gesteuert werden.

Bis auf die Wassermengen, die für die Dosierung von Emulgator und eventuell Aktivator sowie Reduktionsmittel benötigt werden, kann die Gesamtmenge des für die Polymerisation benötigten Wassers bei der Herstellung der Prädispersion im Reaktionskessel mit vorgelegt werden. Dem Wasser können Puffersalze zugegeben werden, wie z. B. Natrium-pyrophosphat, Natrium-acetat oder Natrium-borat.

Nach der Herstellung der Prädispersion wird Vinylchlorid oder eine Mischung aus Vinylchlorid und copolymerisierbaren Monomeren unter Rühren zugegeben. Nach Einstellung der gewünschten Polymerisationstemperatur wird mittels des gewählten Initiatorsystems die Polymerisationsreaktion gestartet und ausgesteuert. Besonders vorteilhaft in bezug auf die Latexstabilität ist es, wenn lediglich 40 bis 60 Gewichtsprozent der Gesamtmenge der Emulgatoren bei der Herstellung der Prädispersion vorgelegt werden und die entsprechende Restmenge, ab einem Polymerisationsumsatz von 10 bis 60 %, vorzugsweise 20 bis 60 %, bis zum Ende der Polymerisation absatzweise oder kontinuierlich als wäßrige Emulgatorlösung zudosiert wird. Es ist auch möglich, nur einen Teil des Monomeren vorzulegen und den Rest während der Polymerisationa bsatzweise oder kontinuierlich zuzugeben. Als Comonomere lassen sich z. B. einsetzen: Vinylacetat, Vinylidenchlorid, Vinylether, Acrylnitril, Acrylsäureester, Maleinsäuremono- und -diester. Das Comonomere kann im Copolymerisat bis zu 30, vorzugsweise zwischen 1 und 20 Gewichtsprozent, anwesend sein.

Das Verhältnis Monomere zu Wasser kann bis zu sehr hohen Vinylchloridkonzentrationen beliebig sein (ca. 1: 0,5 bis 1 : 1,6). Im allgemeinen wird man bestrebt sein, so zu polymerisieren, daß man Latices mit einem möglichst hohen Feststoffgehalt erhält von beispielsweise 45 bis 50 Gewichtsprozent.

Der Endumsatz sollte natürlich möglichst hoch sein und wenigstens 90 % betragen.

Als wasserlösliche Katalysatoren lassen sich die üblichen Perverbindungen einsetzen, wie $H_2O_2$, Kaliumpersulfat, sowie die Redoxsysteme, wie sie z. B. in Kainer, Polyvinylchlorid und Vinylchlorid-Mischpolymerisate, Springer-Verlag, 1965, Seite 46 ff., angegeben sind.

Weiterhin können unter Berücksichtigung der jeweiligen Dispergier- und Homogenisiertemperatur monomerlösliche Initiatoren und - falls erforderlich - die üblicherweise für eine Redox-Reaktion verwendeten Reduktionsmittel eingesetzt werden. Als Beispiele für monomerlösliche Initiatoren seien genannt: Azoverbindungen, wie Azo-bis-isobutyronitril, 2, 2'-Azo-bis-(2,4-dimethylvaleronitril); oder Peroxide, wie Dicyclohexylperoxidicarbonat, Di-n-butylperoxidicarbonat, Di-lauroylperoxid, Dibenzolperoxid, Dipropionylperoxid, tert.-Butylperoxi-S-ethylhexanoat, tert. -Butyl peroxibenzoat, Cumylhydroperoxid, tert. Butylhydroperoxid. Beispiele für Reduktionsmittel sind Natrium-thiosulfat, Natrium-formaldehydsulfoxilat, Ascorbinsäure und Isoascorbinsäure.

Die Initiatoren können in üblichen Mengen von 0,005 bis 0,5 Gewichtsprozent, vorzugsweise 0,01 bis 0,1 Gewichtsprozent, bezogen auf das Monomere, eingesetzt werden.

Die Polymerisationstemperatur kann - je nach gewünschtem Molekulargewicht - 40 bis 70°C betragen.

Die Polymerisationsdauer ist - wie stets - von der Polymerisationstemperatur und der Katalysatorkonzentration abhängig. Sie kann etwa 4 bis 16 Stunden betragen.

Es sollte zweckmäßigerweise mit üblichen Umfangsgeschwindigkeiten von 10 bis 70 UpM und mit den bei Emulsions- bzw. Mikrosuspensionspolymerisationsverfahren üblicherweise eingesetzten Blattrührern gerührt werden.

Das erfindungsgemäße Verfahren wird anhand der nachstehenden Beispiele erläutert.

**Beispiel 1**

In einem 6 m³-Rührautoklaven werden 1 600 kg 60°C warmes, entmineralisiertes Wasser vorgelegt. Unter Rühren werden 11 kg Natriumalkylbenzolsulfonat (Gemische von $C_{10}$-$C_{13}$-Alkylbenzolsulfonaten), 22 kg Stearylalkohol sowie 3,7 kg Mono-Natriumphosphat zugegeben. Nach Ausschluß von Luftsauerstoff werden 1 800 kg Vinylchlorid zugegeben. Die Mischung wird auf 52°C, die Rührerdrehzahl auf 10 UpM eingestellt. Durch Zudosierung einer 0,5 %-igen wäßrigen $H_2O_2$-Lösung und einer 0,2 %-igen wäßrigen Ascorbinsäurelösung wird die Reaktion gestartet. Die weitere Dosierung der Katalysatorkomponenten wird so eingestellt, daß bei nahezu voller Kühlkapazität (Mantel: 600 000 kJ/h; Rückflußkühler: 120 000 kJ/h) die Polymerisationstemperatur von 52°C konstant bleibt. Eine Stunde nach Reaktionsbeginn werden 48 kg einer 20 %-igen wäßrigen Lösung von Natrium-Alkylbenzolsulfonat mit einer Geschwindigkeit von 8 kg/h zudosiert. Die Zeit vom Reaktionsbeginn bis zum Druckabfall beträgt 6 Stunden.

Die Aufarbeitung der Dispersion (Feststoffgehalt 46,9 %) erfolgt in einer Sprühtrocknungsanlage. Die Eingangstemperatur der Trocknerluft beträgt dabei 160°C, die Ausgangstemperatur 60°C. Ansonsten erfolgt die Aufarbeitung wie in der DE-AS-2 146 146 beschrieben. Aus 100 Gewichtsteilen des so erhaltenen Polyvinylchlorid-Pulvers und aus 60 Gewichtsteilen Di-2-ethylhexylphthalat (DOP) wird eine Paste hergestellt und deren Viskosität nach 2 und 24 Stunden Lagerung bei verschiedenen Schergeschwindigkeiten in einem Rotations-Rheometer (Gerät: Rheomat 30 der Firma Contraves AG, Zürich) gemessen. Der Eindickfaktor EF ist ein Maß für die Lagerstabilität der Paste. Er wird ermittelt aus dem Quotienten des Viskositätswertes, bestimmt nach einer Lagerzeit von 24 Stunden, dividiert durch den Viskositätswert, bestimmt nach 2 Stunden, bei einer Schergeschwindigkeit von $D = 1\ S^{-1}$. Der Tabelle 1 sind die Pastenviskositäten bei verschiedenen Schergeschwindigkeiten sowie der Eindickfaktor EF zu entnehmen.

Zur Prüfung der Verschäumungseigenschaften des verschäumten Polyvinylchlorids wird eine Paste nach folgender Rezeptur hergestellt:

```
100   Teile Polyvinylchlorid
 40   Teile Di-2-ethylhexylphthalat
 20   Teile Benzylbutylphthalat
  3   Teile Azodicarbonamid
1,5 Teile Cd/Zn-Stabilisator
```

Die Paste wird 1 Stunde im Vakuum entlüftet. Sie wird nach einer Lagerzeit von weiteren 24 Stunden auf ein Trennpapier mit einer Auftragsstärke von 1 mm aufgerakelt und bei einer Verweilzeit von 1,5 Minuten bei 200°C in einem Gelierkanal geliert und expandiert.

An dem erhaltenen Schaumstoff wird die Schaumdichte und der Volumenanteil geschlossener und offener Zellen bestimmt. Letzteres wird wie folgt bestimmt: Aus den erhaltenen geschäumten Proben werden Teile von 100 cm² Grundfläche ausgestanzt, diese in einen mit Wasser gefüllten Exsikkator gegeben und evakuiert, so daß die Luft aus den offenen Zellen entfernt wird. Nach dem Belüften und Entnahme der Probe aus dem Exsikkator haben sich die offenen Zellen mit Wasser gefüllt. Durch Auswiegen der aufgenommenen Wassermenge kann der Volumenanteil der offenen Zellen errechnet werden. Der Volumenanteil des Weich-Polyvinylchlorids ergibt sich aus seiner Dichte und der Dichte des Schaums. Der prozentuale Volumenanteil der geschlossenen Zellen ergibt sich dann als Differenz zwischen 100 % und der Summe vom Volumenanteil offener Zellen und Weich-Polyvinylchlorid. Die Volumenanteile von geschlossenen und offenen Zellen sind der Tabelle 2 zu entnehmen.

**Beispiel 2**

In einem 6 m³-Rührautoklaven werden 1 600 kg 60°C warmes entmineralisiertes Wasser vorgelegt. Unter Rühren werden 22 kg eines Gemisches aus etwa gleichen Teilen von Cetyl- und von Stearylalkohol, 3 kg Natriumacetat, 9,25 kg Natrium-di-2-ethylhexylsulfosuccinat sowie 1,5 kg tert, -Butylperbenzoat zugegeben. Nach Ausschluß von Luftsauerstoff werden 1 800 kg Vinylchlorid zugefügt. Diese Mischung wird auf eine Temperatur von 52°C, die Rührerdrehzahl auf 10 UpM eingestellt. Durch Zudosierung einer 0,2 %-igen Ascorbinsäurelösung wird die Reaktion gestartet. Die weitere Dosierung wird so eingestellt, daß bei nahezu voll genutzter Kühlkapazität die Polymerisationstemperatur von 52°C gehalten wird. 2 Stunden nach Reaktionsbeginn wird mit der Dosierung von 105 kg einer 10 %-igen wäßrigen Lösung von Natrium-di-2-ethylhexylsulfosuccinat mit einer Geschwindigkeit von 15 kg/h begonnen. Die Zeit vom Reaktionsbeginn bis zum Druckabfall beträgt 8 Stunden.

Nach beendeter Reaktion beträgt der Feststoffgehalt der Dispersion 45,6 %. Die Aufarbeitung der Dispersion erfolgt wie in Beispiel 1. Die Pastenviskositäten des Pulvers, angepastet mit DOP im Verhältnis 100 : 60, und der Eindickfaktor der Paste sind der Tabelle 1 zu entnehmen. Die Verschäumung wird wie in Beispiel 1 durchgeführt. Die Ergebnisse sind Tabelle 2 zu entnehmen.

**Beispiel 3**

In einem 6 m³-Rührautoklaven werden 1 600 kg 60°C warmes entmineralisiertes Wasser vorgelegt. Unter Rühren werden 13,5 kg Laurinsäure, 7,5 kg Natrium-laurylsulfat, 22 kg Stearylalkohol sowie 1,2 kg Natriumhydroxid zugegeben. Nach Ausschluß von Luftsauerstoff werden 1 800 kg Vinylchlorid zugefügt. Die Mischung wird auf eine Tempereatur von 52°C, die Rührerdrehzahl auf 10 UpM eingestellt. Die Reaktion wird mit einer 0,5 %-igen wäßrigen $H_2O_2$-Lösung und einer 0,2 %-igen wäßrigen Natrium-formaldehyd-sulfoxylat-Lösung gestartet. Eine halbe Stunde nach Reaktionsbeginn werden 80 kg einer 3 %-igen wäßrigen Natriumhydroxidlösung innerhalb von 4 Stunden zudosiert.

Die Aufarbeitung der Dispersion (Feststoffgehalt 47,1 %) erfolgt wie in Beispiel 1. Der pH-Wert des wäßrigen Produktauszugs wird mit Hilfe einer 6 %-igen Oxalsäure-Lösung, die in der Verdüsungsanlage mitversprüht wird (Arbeitsweise gemäß DE-PS-2 531 780, Beispiel 3), auf 5,5 eingestellt. Die Pastenviskosität, angepastet mit DOP im Verhältnis 100 : 60, sowie die Pastenlagerstabilität sind der Tabelle 1 zu entnehmen.

Die Verschäumung wird wie im Beispiel 1 durchgeführt. Die Ergebnisse sind Tabelle 2 zu entnehmen.

**Beispiel 4**

In einem 6-m³-Rührautoklaven werden 1 600 kg 60°C warmes, entmineralisiertes Wasser vorgelegt. Unter Rühren werden 16,5 kg Natriumalkylbenzolsulfonat (Gemische von $C_{10}$-$C_{13}$-Alkylbenzolsulfonaten), 22 kg Stearylalkohol sowie 3,7 kg Mono-Natriumphosphat zugegeben. Nach Ausschluß von Luftsauerstoff werden 1 800 kg Vinylchlorid zugegeben. Die Mischung wird auf 52°C, die Rührerdrehzahl auf 10 UpM eingestellt. Durch Zudosierung einer 0,5 %-igen wäßrigen $H_2O_2$-Lösung und einer 0,2 %-igen wäßrigen Ascorbinsäurelösung wird die Reaktion gestartet. Die weitere Dosierung der Katalysatorkomponenten wird so eingestellt, daß bei nahezu voller Kühlkapazität (Mantel: 600 000 kJ pro h; Rückflußkühler: 120 000 kJ pro h) die Polymerisationstemperatur von 52°C konstant bleibt. Eine Stunde nach Reaktionsbeginn werden 19,5 kg einer 20 %-igen wäßrigen Lösung von Natrium-Alkylbenzolsulfonat mit einer Geschwindigkeit von 8 kg/h zudosiert. Die Zeit vom Reaktionsbeginn bis zum Druckabfall beträgt 6 Stunden.

Die Aufarbeitung der Dispersion (Feststoffgehalt 47,6 %) erfolgt in einer Sprühtrocknungsanlage. Die Eingangstemperatur der Trocknerluft beträgt dabei 160°C, die Ausgangstemperatur 60°C. Ansonsten erfolgt die Aufarbeitung wie in der DE-AS-2 146 146 beschrieben. Aus 100 Gewichtsteilen des so erhaltenen Polyvinylchlorid-Pulvers und aus 60 Gewichtsteilen Di-2-ethylhexylphthalat (DOP) wird eine Paste hergestellt und deren Viskosität nach 2 und 24 Stunden Lagerung bei verschiedenen Schergeschwindigkeiten in einem Rotations-Rheometer (Gerät: Rheomat 30 der Firma Contraves AG, Zürich) gemessen. Der Eindickfaktor EF ist ein Maß für die Lagerstabilität der Paste. Er wird ermittelt aus dem Quotienten des Viskositätswerts, bestimmt nach einer Lagerzeit von 24 Stunden, dividiert durch den Viskositätswert, bestimmt nach 2 Stunden, bei einer Schergeschwindigkeit von $D = 1S^{-1}$. Der Tabelle 1 sind die Pastenviskositäten bei verschiedenen Schergeschwindigkeiten sowie der Eindickfaktor EF zu entnehmen.

Zur Prüfung der Verschäumungseigenschaften des verschaumten Polyvinylchlorids wird eine Paste nach folgender Rezeptur hergestellt:

    100    Teile Polyvinylchlorid
    40     Teile Di-2-ethylhexylphthalat
    20     Teile Benzylbutylphthalat
    3      Teile Azodicarbonamid
    1,5 Teile Cd/Zn-Stabilisator

Die Paste wird 1 Stunde im Vakuum entlüftet. Sie wird nach einer Lagerzeit von weiteren 24 Stunden auf ein Trennpapier mit einer Auftragsstärke von 1 mm aufgerakelt und bei einer Verweilzeit von 1,5 Minuten bei 200°C in einem Gelierkanal geliert und expandiert.

An dem erhaltenen Schaumstoff wird die Schaumdichte und der Volumenanteil geschlossener und offener Zellen bestimmt. Letzteres wird wie folgt bestimmt: Aus den erhaltenen geschäumten Proben werden Teile von 100 cm² Grundfläche ausgestanzt, diese in einen mit Wasser gefüllten Exsikkator gegeben und evakuiert, so daß die Luft aus den offenen Zellen entfernt wird. Nach dem Belüften und Entnahme der Probe aus dem Exsikkator haben sich die offenen Zellen mit Wasser gefüllt. Durch Auswiegen der aufgenommenen Wassermenge kann der Volumenanteil der offenen Zellen errechnet werden. Der Volumenanteil des Weich-Polyvinylchlorids ergibt sich aus seiner Dichte und der Dichte des Schaums. Der prozentuale Volumenanteil der geschlossenen Zellen ergibt sich dann als Differenz zwischen 100 % und der Summe vom Volumenanteil offener Zellen und Weich-Polyvinylchlorid. Die Volumenanteile von geschlossenen und offenen Zellen sind der Tabelle 2 zu entnehmen.

**Beispiel 5**

In einem 6-m³-Rührautoklaven werden 1 600 kg 60°C warmes entmineralisiertes Wasser vorgelegt. Unter Rühren werden 16,7 kg Myristinsäure, 22 kg Stearylalkohol sowie 2,25 kg Natriumhydroxid zugegeben. Nach Ausschluß von Luftsauerstoff werden 1 800 kg Vinylchlorid zugefügt. Die Mischung wird auf eine Temperatur von 52°C, die Rührerdrehzahl auf 10 UpM eingestellt. Die Reaktion wird mit einer 0,5 %-igen wäßrigen $H_2O_2$-Lösung und einer 0,2 %-igen wäßrigen Natrium-formaldehyd-sulfoxylat-Lösung gestartet. Eine halbe Stunde nach Reaktionsbeginn werden 71 kg einer 2 %-igen wäßrigen Natriumhydroxidlösung innerhalb von 4 Stunden zudosiert.

Die Aufarbeitung der Dispersion (Feststoffgehalt 47,1 %) erfolgt wie in Beispiel 4. Der pH-Wert des wäßrigen Produktauszugs wird mit Hilfe einer 6 %-igen Oxalsäure-Lösung, die in der Verdüsungsanlage mitversprüht wird (Arbeitsweise gemäß DE-PS-2 531 780, Beispiel 3), auf 5,5 eingestellt. Die Pastenviskosität, angepastet mit DOP im Verhältnis 100 : 60, sowie die Pastenlagerstabilität sind der Tabelle 1 zu entnehmen.

Die Verschäumung wird wie im Beispiel 4 durchgeführt. Die Ergebnisse sind Tabelle 2 zu entnehmen.

**Vergleichsversuch A** (deutsche Anmeldung P-3 242 088. 9)

In einem 2 m³-Behälter werden 1 650 kg 60°C warmes entmineralisiertes Wasser vorgelegt. Unter Rühren werden 18 kg Natrium-alkylbenzolsulfonat (Gemische von $C_{10}$-$C_{13}$-Alkylbenzolsulfonaten) und 22 kg Stearylalkohol zugegeben. Das Gemisch wird durch einen einstufigen Kolbenpumpenhomogeisator hindurchgeführt. Der Druck im Homogenisierknopf beträgt 180 bar, die Rückführungszeit (Einstellzeit) 5 min. Das homogenisierte Gemisch wird unter Ausschluß von Luftsauerstoff einem 6 m³-Rührautoklaven, der über den Mantel gekühlt oder beheizt werden kann, zugeleitet. (Der Autoklav ist zudem mit einem Rückflußkühler ausgerüstet.) Hierzu werden 1 800 kg Vinylchlorid zugegeben. Die Mischung wird auf 52°C erwärmt. Die Rührerdrehzahl wird auf 10 UpM eingestellt. Durch Zudosieren einer 0,5 %-igen wäßrigen $H_2O_2$ -Lösung und einer 0,2 %-igen wäßrigen Ascorbinsäurelösung wird die Reaktion gestartet. Die weitere Dosierung wird so eingestellt, daß bei nahezu voller Kühlkapazität die Polymerisationstempratur von 52°C konstant bleibt. Die Zeit bis zum Druckabfall beträgt 5 Stunden.

Die Aufarbeitung der Dispersion (Feststoffgehalt von 47,1 %) erfolgt wie in Beispiel 1.

Aus 100 Gewichtsteilen des so erhaltenen Polyvinylchlorid-Pulvers und aus 60 Gewichtsteilen Di-2-ethylhexylphthtalat (DOP) wird eine Paste hergestellt und deren Viskosität nach 2 und 24 Stunden Lagerung bei verschiedenen Schergeschwindigkeiten in einem Rotations-Rheometer gemessen. Die Pastenviskositäten und der Eindickfaktor sind Tabelle 1 zu entnehmen. Die Verschäumung wird wie in Beispiel 1 durchgeführt. Die Ergebnisse sind Tabelle 2 zu entnehmen.

**Vergleichsbeispiel B**

Man arbeitet wie in Vergleichsbeispiel A, setzt jedoch bei der Herstellung der Prädispersion zusätzlich 1,5 kg tert.-Butylperbenzoat ein und verwendet als Emulgator 18 kg Natrium-di-2-ethylhexylsulfosuccinat.

Die Polymerisationsreaktion wird mittels einer 0,2 %-igen wäßrigen Ascorbinsäurelösung gestartet und ausgesteuert.

Nach beendeter Reaktion beträgt der Feststoffgehalt der Dispersion 46,5 %. Die Aufarbeitung der Dispersion erfolgt wie in Beispiel 1. Die Pastenviskositäten des Pulvers, angepastet mit DOP im Verhältnis 100 : 60, und der Eindickfaktor der Paste sind der Tabelle 1 zu entnehmen.

Die Verschäumung wird wie in Beispiel 1 durchgeführt. Die Ergebnisse sind Tabelle 2 zu entnehmen.

**Vergleichsbeispiel C**

Man arbeitet wie in Vergleichsbeispiel B, verwendet jedoch als Emulgator ein Gemisch aus 15 kg Natrium-laurat und 7,5 kg Natrium-laurylsulfat. Dem Wasser werden noch 0,9 kg Natriumhydroxid zugegeben. Die Reaktion wird gestartet und ausgesteuert mit einer 0,5 %-igen wäßrigen $H_2O_2$-Lösung und einer 0,2 %-igen wäßrigen Natrium-formaldehydsulfoxilat-Lösung.

Die Aufarbeitung der Dispersion (Feststoffgehalt 46,3 %) erfolgt wie in Beispiel 3. Die Pastenviskositäten des Pulvers, angepastet mit DOP im Verhältnis 100 : 60, sowie die Pastenlagerstabilität sind der Tabelle 1 zu entnehmen.

Die Verschäumung wird wie in Beispiel 1 durchgeführt. Die Ergebnisse sind Tabelle 2 zu entnehmen.

7

**Vergleichsbeispiel D** (deutsche Anmeldung P-3 210 891.5)

In einem 50-l-Behälter werden 17 kg 60°C warmes Wasser vorgelegt. Unter Rühren werden 4,3 kg einer 21 %-igen wäßrigen Natriumalkylbenzolsulfonatlösung (Gemisch von $C_{10}$-$C_{13}$-Alkylbenzolsulfonaten) und 1,3 kg einer wäßrigen Natriumsalzlösung des Sulfobernsteinsäure-diethylhexylesters (70 Gewichtsprozent) sowie 1,8 kg eines Gemisches aus etwa gleichen Teilen von Cetyl- und von Stearylalkohol zugegeben.

In einem Rührautoklaven von 500 l Inhalt, der mit Heiz - und Kühleinrichtungen versehen ist, werden unter Ausschluß von Luft-Sauerstoff 120 l entsalztes Wasser, 0,2 l der zuvor bereiteten Emulgatorlösung, 260 g Mononatriumphosphat vorgelegt. Die Mischung wird auf 52°C erwärmt. Hierzu werden 45 kg Vinylchlorid gegeben. Durch Zudosieren einer 0,5 %-igen wäßrigen $H_2O_2$ - und einer 0,2 %-igen wäßrigen Ascorbinsäurelösung zu jeweils gleichen Teilen wird die Reaktion gestartet.

Die Aktivatordosierung wird so eingestellt, daß bei nahezu voller Kühlkapazität die Polymerisationstemperatur von 52°C konstant bleibt. Im weiteren Verlauf der Polymerisation werden innerhalb von 3 Stunden weitere 135 kg Vinylchlorid zudosiert. Die restliche Emulgatorlösung wird wie folgt während der Reaktionszeit verteilt:

| Zeit (h) | 1 | 2 | 3 | 4 |
|---|---|---|---|---|
| Emulgator (1) | 0,5 | 5,8 | 10,3 | 10,7 |

Die Aufarbeitung der Dispersion (Feststoffgehalt 48, 5 %) erfolgt wie in Beispiel 3. Die Pastenviskositäten des Pulvers, angepastet mit DOP im Verhältnis 100 : 60, sowie die Pastenlagerstabilität sind der Tabelle 1 zu entnehmen.

Die Verschäumung wird wie in Beispiel 1 durchgeführt. Die Ergebnisse sind Tabelle 2 zu entnehmen.

**Tabelle 1**

Pastenviskosität (d Pas)

| | $D = 0,3 S^{-1}$ | | $D = 1 S^{-1}$ | | $D = 10 S^{-1}$ | | $D = 100 S^{-1}$ | | EF | | Konz. d. Emulgatorsystems, bez. auf Vinylchlorid (%) |
|---|---|---|---|---|---|---|---|---|---|---|---|
| | 2 h | 24 h | 2 h | 24 h | 2 h | 24 h | 2 h | 24 h | | | |
| Beispiel 1 | 43 | 54 | 31 | 38 | 25 | 30 | 29 | 33 | 1,2 | | 2,4 |
| Beispiel 2 | 56 | 72 | 38 | 42 | 33 | 34 | 38 | 41 | 1,1 | | 2,3 |
| Beispiel 3 | 72 | 110 | 51 | 66 | 52 | 60 | 75 | 80 | 1,3 | | 2,4 |
| Beispiel 4 | 45 | 57 | 32 | 41 | 26 | 34 | 31 | 36 | 1,28 | | |
| Beispiel 5 | 75 | 118 | 46 | 58 | 33 | 45 | 36 | 48 | 1,26 | | |
| Vgl.-Bsp. A | 62 | 79 | 36 | 45 | 24 | 30 | 24 | 31 | 1,3 | | 2,2 |
| Vgl.-Bsp. B | 53 | 66 | 39 | 45 | 35 | 36 | 40 | 42 | 1,2 | | 2,2 |
| Vgl.-Bsp. C | 240 | - | 180 | - | 130 | - | 120 | - | - | nach 24h nicht mehr meßbar | 2,4 |
| Vgl.-Bsp. D | 72 | 130 | 55 | 100 | 44 | 80 | 41 | 77 | 1,8 | | 2,0 |

Interpretation zu Tabelle 1:

Aus den gemessenen Viskositäten wird ersichtlich, daß auch nach dem erfindungsgemäßen Verfahren sehr niedrige Pastenviskositäten resultieren. Wie Vergleichsbeispiel C zeigt, wird es erst auf diese Weise möglich, verarbeitbare Pasten herzustellen. Außerdem ist die Lagerstabilität der Pasten besser als in den Vergleichsbeispielen.

**Tabelle 2**

Schaumeigenschaften

| | Volumenanteil offene Zellen % | Volumenanteil geschlossene Zellen % |
|---|---|---|
| Beispiel 1 | 64,0 | 15,1 |
| Beispiel 2 | 48,1 | 20,2 |
| Beispiel 3 | 60,9 | 14,9 |
| Beispiel 4 | 61,2 | 17,4 |
| Beispiel 5 | 58,5 | 18,2 |
| Vgl.-Bsp. A | 2,0 | 75,6 |
| Vgl.-Bsp. B | 15,6 | 54,1 |
| Vgl.-Bsp. C | 2,7 | 75,1 |
| Vgl.-Bsp. D | 5,1 | 70,4 |

Wie ersichtlich, lassen sich aus den erfindungsgemäß hergestellten Polymerisaten Schaumstoffe mit vorwiegend offenzelliger Struktur herstellen, welche bekanntlich ein gutes Rückstellvermögen zeigen.

**Patentansprüche**

1. Verfahren zur Herstellung von verpastbaren Polymeren des Vinylchlorids oder Mischungen von Vinylchlorid mit bis zu 30 Gewichtsprozent copolymerisierbaren Monomeren durch diskontinuierliche Polymerisation in Gegenwart von wasserlöslichen oder monomerlöslichen Katalysatoren und einer Prädispersion aus

a) einem Alkalimetall- oder Ammoniumsalz einer 12 bis 18 C-Atome enthaltenden verzweigten oder unverzweigten Fettsäure, einer 10 bis 20 C-Atome enthaltenden verzweigten oder unverzweigten Alkylsulfonsäure, einer 8 bis 18 C-Atome in der verzweigten oder unverzweigten Alkylkette enthaltenden Alkylarylsulfonsäure oder eines 6 bis 14 C-Atome im Alkoholteil enthaltenden Sulfobernsteinsäureesters in Mengen von 0,2 bis 3,0 Gewichtsprozent, bezogen auf Monomeres,
b) einem geradkettigen oder verzweigten $C_{12}$-$C_{20}$-Alkanol in Mengen von 50 bis 200 Gewichtsprozent, bezogen auf das eingesetzte Tensid,
c) Wasser, sowie gegebenenfalls
d) einem monomerlöslichen Katalysator,

dadurch gekennzeichnet,
daß die Prädispersion nur mit 30 bis 80 Gewichtsprozent der insgesamt benötigten Emulgatormenge (Tensidmenge) hergestellt und dem Polymerisationsansatz zugefügt wird, während der Rest des Emulgators oder eines den Emulgator bildenden Bestandteils nach einem Umsatz von 10 bis 60 Gewichtsprozent dem Polymerisationsgemisch absatzweise oder kontinuierlich als wäßrige Lösung zudosiert wird.
2. Verfahren nach Anspruch 1,
dadurch gekennzeichnet,
daß nur 40 bis 60 Gewichtsprozent der insgesamt benötigten Emulgatormenge zur Herstellung der Prädispersion eingesetzt werden.
3. Verwendung der nach den Ansprüchen 1 und 2 erhaltenen Polymeren des Vinylchlorids zur Herstellung von Weichschaumstoffen unter Einsatz chemischer Treibmittel.

**Claims**

1. A process for the preparation of a paste-making polymer of vinyl chloride or a mixture of vinyl chloride containing up to 30 % by weight of copolymerisable monomer by batchwise polymerisation in the presence of a water-soluble or monomer-soluble catalyst and in the presence of a predispersion comprising

a) 0.2 to 3.0 per cent by weight, based on the monomer, of an alkali metal salt or ammonium salt of a branched or unbranched fatty acid containing 12 to 18 C atoms, of a branched or unbranched alkylsulphonic acid containing 10 to 20 C atoms, of an alkylarylsulphonic acid containing 8 to 18 C atoms in the branched or unbranched alkyl chain, or of a sulfosuccinic acid ester containing 6 to 14 C atoms in the alcohol moiety,
b) 50 to 200 per cent by weight, based on the surfactant employed, of a straight-chain or branched $C_{12}$-$C_{20}$-alkanol,
c) water, and optionally
d) a monomer-soluble catalyst,

characterised in that the predispersion is prepared containing only 30 to 80 per cent by weight of the total amount of emulsifier (amount of surfactant) required and is added to the polymerisation batch, whereas the remainder of the emulsifier or of a component forming the emulsifier is added to the polymerisation mixture batchwise or continuously as an aqueous solution after a conversion of 10 to 60 per cent by weight has been reached.
2. A process according to claim 1, characterised in that only 40 to 60 per cent by weight of the total amount of emulsifier required are employed to prepare the predispersion.
3. The use of the vinyl chloride polymer obtained according to claim 1 or 2, for the preparation of flexible foams using chemical blowing agents.

**Revendications**

1. Procédé de préparation de polymères du chlorure de vinyle ou de mélanges de chlorure de vinyle avec jusqu'à 30 % en poids de monomères copolymérisables, lesdits polymères ou mélanges pouvant être transformés en pâtes, par polymérisation discontinue en présence de catalyseurs solubles dans l'eau ou solubles dans le monomère, et d'une pré-dispersion obtenue à partir

a) d'un sel de métal alcalin ou d'ammonium d'un acide gras ramifié ou non-ramifié renfermant de 12 à 18 atomes de carbone, d'un acide aryl-sulfonique ramifié ou non-ramifié renfermant de 10 à 20 atomes de carbone, d'un acide alkyl-aryl-sulfonique renfermant de 8 à 18 atomes de carbone dans la chaîne alkyle ramifiée ou non-ramifiée ou d'un ester de l'acide sulfo-succinique renfermant de 6 à 14 atomes de carbone dans la partie alcool, dans des quantités de 0,2 à 3,0 % en poids, relativement au monomère,

b) d'un alcanol linéaire ou ramifié comportant de 12 à 20 atomes de carbone, dans des quantités de 50 à 200 % en poids, relativement à l'agent tensio-actif utilisé,

c) d'eau, ainsi que, le cas échéant,

d) d'un catalyseur soluble dans le monomère,

caractérisé par le fait que la pré-dispersion n'est préparée qu'avec 30 à 80 % en poids de la quantité d'émulsifiant (quantité d'agent tensio-actif) globalement nécessaire et qu'elle est ajoutée à la charge de polymérisation, tandis que le reste de l'émulsifiant, ou d'un composant formant l'émulsifiant, n'est ajouté à l'état de solution aqueuse au mélange de polymérisation, par fractions ou de façon continue, qu'après conversion de 10 à 60 % en poids.

2. Procédé selon la revendication 1, caractérisé par le fait que 40 à 60 % en poids seulement de la quantité d'émulsifiant nécessaire au total sont ajoutés à la prédispersion.

3. L'utilisation des polymères de chlorure de vinyle obtenus selon les revendications 1 et 2, pour la préparation de substances-mousse souples avec addition d' agents gonflants chimiques.